## Europäisches Patentamt

## European Patent Office

## Office européen des brevets

(19)

(11) Veröffentlichungsnummer: **0 006 144**
**B1**

(12) **EUROPÄISCHE PATENTSCHRIFT**

(45) Veröffentlichungstag der Patentschrift:
25.08.82

(51) Int. Cl.³: **H 04 M 11/06**

(21) Anmeldenummer: 79101573.8

(22) Anmeldetag: 22.05.79

(54) Schaltungsanordnung zum Übertragen von Signalen zwischen einer Datenübertragungseinheit und einem Datenendgerät.

(30) Priorität: 15.06.78 DE 2826323

(43) Veröffentlichungstag der Anmeldung:
09.01.80 Patentblatt 80/1

(45) Bekanntmachung des Hinweises auf die Patenterteilung:
25.08.82 Patentblatt 82/34

(84) Benannte Vertragsstaaten:
AT BE CH IT NL SE

(56) Entgegenhaltungen:
FERNMELDE-PRAXIS, Band 51, 1974 Nr. 23 Berlin, DE, BADZIONG et al.: »Die Automatische Wähleinrichtung für Datenverbindungen (AWD)«, Seiten 975—985
INSTITUTE OF ELECTRICAL AND ELECTRONICS ENGINEERS: INTERNATIONAL CONFERENCE ON COMMUNICATIONS; San Francisco 16—18, Juni 1975 New York, U.S.A. FOLTZ: »X.21. The international interface for new synchronous data networks«, Seiten 1.15—1.19
ELECTRONIC EQUIPMENT NEWS, Juli/August 1977 London, G. B. FRENHEISER: »Implementing a micro-processor system«, Seiten 15, 22

(73) Patentinhaber: SIEMENS AKTIENGESELLSCHAFT
Berlin und München, Postfach 22 02 61,
D-8000 München 22 (DE)

(72) Erfinder: Sailer, Heinrich, Dipl.-Ing.,
Michlbauerstrasse 3, D-8021 Neuried (DE)

## Schaltungsanordnung zum Übertragen von Signalen zwischen einer Datenübertragungseinheit und einem Datenendgerät

Die Erfindung bezieht sich auf eine Schaltungsanordnung zum Übertragen von Signalen zwischen einer Datenübertragungseinheit und einem Datenendgerät über eine Mehrzahl von Übertragungsleitungen, zu denen eine Steuerleitung gehört, über die von dem Datenendgerät ein die Belegung einer mit der Datenübertragungseinheit verbundenen Fernleitung forderndes Belegungssignal an die Datenübertragungseinheit übertragen wird, wobei die Datenübertragungseinheit selbsttätig an die Fernleitung anschaltbar ist und wobei das Wählen einer fernen Teilnehmerstelle durch von der Datenübertragungseinheit abgegebene Wählsignale erfolgt.

Schaltungsanordnungen der vorstehend bezeichneten Art sind bereits bekannt (DE-PS 2 345 036; Zeitschrift »Fernmelde-Praxis«, Band 51, 1974, Nr. 23, Seiten 975 bis 985; Zeitschrift »IEEE: International Conference on Communications«, San Francisco, 16–18, Juni 1975, New York, USA). Von Nachteil bei diesen bekannten Schaltungsanordnungen ist jedoch die Tatsache, daß für die Verbindung zwischen der jeweiligen Datenendeinrichtung und der jeweiligen Datenübertragungsanordnung stets eine Vielzahl von Leitungen erforderlich ist. In einem Falle sind es 10 Leitungen, in einem anderen Fall sind es hingegen 6 Leitungen. Diese Vielzahl von Leitungen, die durch unterschiedliche CCITT-Empfehlungen gewissermaßen vorgeschrieben sind, wird bei den bekannten Schaltungsanordnungen für die Ausführung der verschiedenen Übertragungsaufgaben benötigt. So sind für die zu übertragenden unterschiedlichen Steuersignale und Datensignale jeweils gesonderte Leitungen vorzusehen. Dadurch ist es dann bei den betreffenden bekannten Schaltungsanordnungen möglich, für die Abgabe bzw. Aufnahme der verschiedenen Signale mit dafür vorgesehenen speziellen Schaltungen auszukommen.

Um den vorstehend aufgezeigten Nachteil der bekannten Schaltungsanordnungen zu vermeiden, so daß mit einer geringeren Anzahl von Leitungen zwischen der jeweiligen Datenendeinrichtung und der jeweiligen Datenübertragungsanordnung ausgekommen werden kann, könnte man nun anstatt der Vielzahl von Steuerleitungen und Datenleitungen jeweils nur eine Steuerleitung bzw. eine Datenleitung vorsehen und über diese Leitungen dann die erforderlichen Steuersignale bzw. Datensignale zeitlich nacheinander übertragen. Ein solches Vorgehen würde jedoch einen relativ hohen schaltungstechnischen Aufwand mit sich bringen, da sowohl in der jeweiligen Datenendeinrichtung als auch in der jeweiligen Datenübertragungsanordnung für die Auswertung der verschiedenen, zeitlich nacheinander auftretenden Signale entsprechende Auswerteeinrichtungen zur Verfügung zu stellen wären. Da bei der vorstehend erwähnten Vorgehensweise über die vorgesehene Steuerleitung auch die eigentliche Verbindung zwischen der jeweiligen Datenendeinrichtung und der zugehörigen Datenübertragungsanordnung herstellende und auslösende Steuersignale übertragen werden, kann es somit auch zu Störungen hierbei kommen, wenn diesen Signalen entsprechende Störsignale auftreten.

Der Erfindung liegt nun die Aufgabe zugrunde, einen Weg zu zeigen, wie ausgehend von den bisher bekannten Schaltungsanordnungen der eingangs genannten Art mit einer geringeren Anzahl von Leitungen zwischen der Datenübertragungseinheit und dem Datenendgerät ausgekommen werden kann als bisher und wie zugleich eine besonders einfache und sichere Übertragung der verschiedenen Steuersignale zwischen der Datenübertragungseinheit und dem Datenendgerät ermöglicht wird.

Gelöst wird die vorstehend aufgezeigte Aufgabe bei einer Schaltungsanordnung der eingangs genannten Art erfindungsgemäß dadurch, daß neben der genannten Steuerleitung, die lediglich für die Übertragung des während der Dauer der Belegung der Datenübertragungseinheit durch das Datenendgerät als Dauersignal auftretenden Belegungssignals ausgenutzt ist, zwischen der Datenübertragungseinheit und dem Datenendgerät nur zwei gesonderte Datenleitungen vorgesehen sind, daß die eine Datenleitung zum Übertragen eines die Belegung der Fernleitung von der Datenübertragungseinheit her bestätigenden Quittungssignals zu dem Datenendgerät, zum Übertragen mindestens eines das Datenendgerät zur Abgabe von Wählziffern auffordernden Aufforderungssignals nach Übertragen des genannten Quittungssignals, zum Übertragen eines die Verbindungsherstellung zu einer fernen Teilnehmerstelle quittierenden Antwortsignals und zum Übertragen von Datensignalen von dieser fernen Teilnehmerstelle her ausgenutzt ist und daß die andere Datenleitung zum Übertragen der für einen Verbindungsaufbau zu der gewünschten fernen Teilnehmerstelle hin erforderlichen Wählziffern auf das Auftreten wenigstens eines Wahlaufforderungssignals und zum anschließenden Übertragen von Datensignalen von dem Datenendgerät zu der fernen Teilnehmerstelle hin ausgenutzt ist.

Die Erfindung bringt den Vorteil mit sich, daß gegenüber den bisher bekanntgewordenen Schaltungsanordnungen mit insgesamt nur drei Leitungen zwischen der Datenübertragungseinrichtung und dem Datenendgerät ausgekommen werden kann, um dennoch sämtliche für die Übertragung in Frage kommenden Signale übertragen zu können. Dabei werden die beiden vorgesehenen Datenleitungen nicht nur für die Übertragung von Datensignalen ausgenutzt, sondern auch für die Übertragung von Steuersignale darstellenden Signalen. Durch diese Maßnahme kann die eigentliche Steuerleitung allein für die Übertragung des während der Dauer der Belegung der Datenübertragungseinheit durch das Datenendgerät als Dauersignal auftretenden Belegungssignals ausgenutzt werden. Dies ist insofern von Vorteil, als dadurch eine besonders einfache Belegungssteuerung möglich ist, die gegenüber der oben rein hypotetisch betrachteten Belegungssteuerung den Vorteil einer höheren Störsicherheit bietet. Durch die gemäß der Erfindung erfolgende Ausnutzung der drei Leitungen wird insgesamt mit einem relativ geringen schaltungstechnischen Aufwand in der Datenübertragungseinrichtung ausgekommen, um die einzelnen Signale aufzunehmen bzw. abzugeben. Dies wiederum bringt einen deutlichen Vorteil hinsichtlich des elektrischen Leistungsbedarfs der Schaltungsanordnung gemäß der Erfindung mit sich.

Für eine Übertragung der Wählziffern von dem Datenendgerät zu der Datenübertragungseinheit ist es günstig, wenn die Wählziffern über die zweite Datenleitung binärcodiert übertragen werden. Diese Wählziffern werden beispielsweise durch vier Bits binärcodiert übertragen.

Die Potentialtrennung zwischen dem Datenendgerät und der Fernleitung erfolgt auf einfache Weise, wenn die Datenübertragungseinheit eine ihr Bezugspotential vom Bezugspotential des Datenendgerät trennende Trennstufe enthält.

Die Potentialtrennung wird auf einfache Weise erreicht, wenn die Trennstufe Optokoppler enthält. Hierdurch ist allerdings zu berücksichtigen, daß die Verwendung von Optokopplern in einer Schnittstellenschaltung für eine Fernschreibmaschine bereits bekannt ist (Zeitschrift »Electronic Equipment News«, Juli/August 1977, Seiten 15, 22).

Die Übertragung der Signale erfolgt mit einem besonders geringen Leistungsbedarf, wenn die Trennstufe Übertrager enthält.

Ein vorteilhafter Aufbau der Trennstufe wird erreicht, wenn der Übertrager primärseitig durch getastete Wechselspannungssignale angesteuert wird und sekundärseitig mit einem Komparator verbunden ist, dem eine monostabile Kippstufe mit einer Verzögerungszeit nachgeschaltet ist, die größer ist als die Folgefrequenz der Wechselspannungssignale.

Falls ein Umschalter vorgesehen ist, der eine die erwähnte Fernleitung darstellende Fernsprechleitung wahlweise mit dem Datenendgerät oder mit einem Fernsprechapparat verbindet, ist es von Vorteil, wenn die Datenübertragungseinheit eine Schleifenstromüberwachung enthält, welche die Belegung der Fernsprechleitung durch die Datenübertragungseinheit und die Erzeugung des Quittungssignals verhindert, wenn eine Verbindung zwischen dem Fernsprechapparat und einer fernen Teilnehmerstelle hergestellt ist.

Um auch für die Umschaltung zwischen dem Fernsprechapparat und dem Datenendgerät möglichst wenig Leistung dem Fernsprechnetz zu entnehmen, ist es günstig, wenn der Umschalter als bistabiles Relais ausgebildet ist.

Im folgenden wird ein Ausführungsbeispiel der Schaltungsanordnung anhand von Zeichnungen beschrieben. Es zeigt

Fig. 1 ein Blockschaltbild einer aus einer Datenübertragungseinheit, einem Datenendgerät und einem Fernsprechapparat gebildeten Endstelle,

Fig. 2 ein Signalbild von zwischen der Datenübertragungseinheit und dem Datenendgerät übertragenen Signalen,

Fig. 3 ein Schaltbild einer Trennstufe.

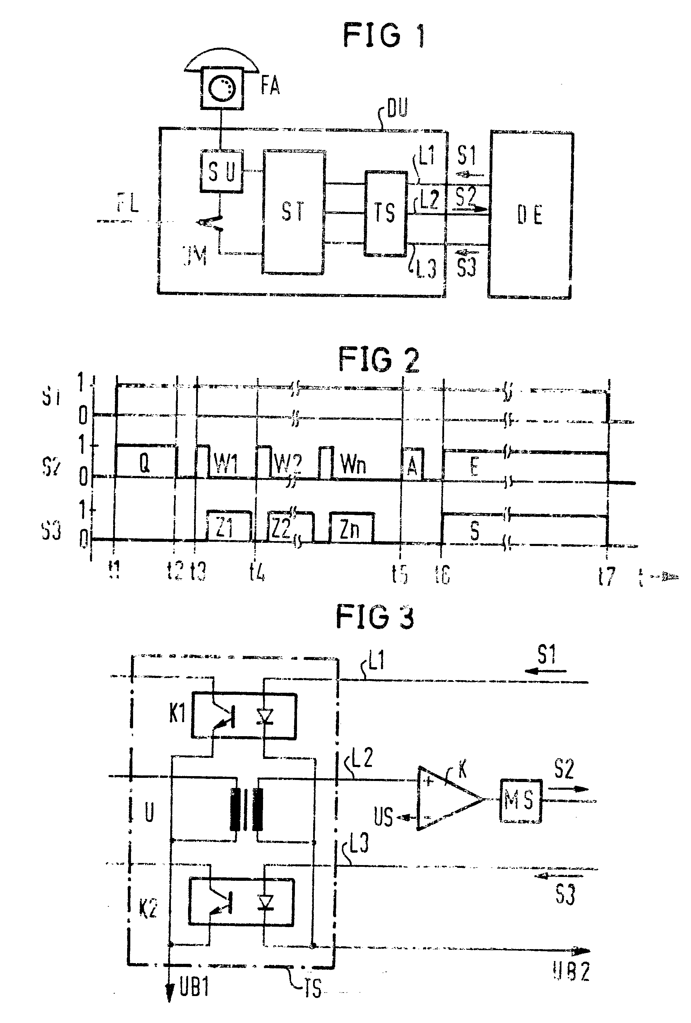

Bei der in Fig. 1 dargestellten Endstelle enthält die Datenübertragungseinheit DU einen Umschalter UM, über den eine Fernsprechleitung FL wahlweise mit einem Fernsprechapparat FA oder mit einem Datenendgerät DE verbindbar ist. Der Umschalter UM befindet sich im Ruhezustand in der durchgezogen dargestellten Stellung, so daß der Fernsprechapparat FA mit der Fernleitung FL verbunden ist. Die Datenübertragungseinheit DU enthält keine eigene Stromversorgung und sie wird aus dem Fernsprechnetz gespeist.

Die Datenübertragungseinheit DU enthält eine Steuereinheit ST, die beispielsweise als Mikroprozessor ausgebildet ist. Weiterhin enthält sie eine Trennstufe TS, die eine Potentialtrennung zwischen dem Datenendgerät DE und der Fernleitung FL durchführt. Von der Trennstufe TS führen eine Steuerleitung L1 und zwei Datenleitungen L2 und L3 zum Datenendgerät DE. Weiterhin enthält die Datenübertragungseinheit DU eine Schleifenstromüberwachung SU, mit der eine Belegung der Fernsprechleitung FL durch das Datenendgerät DE verhindert wird, wenn der Fernsprechapparat FA an die Fernleitung FL angeschaltet ist.

Falls die Schleifenstromüberwachung SU nicht anspricht, können Daten vom Datenendgerät DE über die Fernleitung FL zu einem fernen Teilnehmer übertragen werden. In diesem Fall nimmt der Umschalter UM, gesteuert durch die Steuereinheit ST die gestrichelt dargestellte Stellung an. Die Datenübertragungseinheit DU ist mit einer automatischen Wähleinrichtung versehen und sie gibt Wählsignale zum Wählen eines fernen Teilnehmers an die Fernsprechleitung FL ab. Nach dem Herstellen einer Verbindung zum fernen Teilnehmer sendet dieser einen Antwortton und zeigt der Datenübertragungseinheit DU den Beginn der Übertragung von Daten an. Die Daten können im Halbduplexbetrieb oder im Vollduplexbetrieb zwischen der Datenübertragungseinheit DU und dem fernen Teilnehmer übertragen werden. Die Rufnummer des fernen Teilnehmers kann in der Datenübertragungseinheit DU fest gespeichert sein oder vom Datenendgerät DE jeweils vor dem Herstellen einer Verbindung zur Datenübertragungseinheit DU übertragen werden.

Weitere Einzelheiten werden zusammen mit dem in Fig. 2 dargestellten Signalbild beschrieben.

Bei dem in Fig. 2 dargestellten Signalbild ist in Abszissenrichtung die Zeit t dargestellt und in Ordinatenrichtung sind die Momentanwerte von Signalen S1 bis S3 dargestellt, die über die Leitungen L1 bis L3 zwischen der Datenübertragungseinheit DU und dem Datenendgerät DE übertragen werden. Die Signale S1 bis S3 sind Binärsignale und sie nehmen nur die mit 0 und 1 bezeichneten Binärwerte an.

Zum Zeitpunkt t1 gibt das Datenendgerät DE ein Signal S1 über die Leitung L1 an die Datenübertragungseinheit DU ab, mit dem die Fernsprechleitung FL belegt werden soll. Falls die Schleifenstromüberwachung SU nicht anspricht und damit anzeigt, daß über den Fernsprechapparat FA kein Gespräch geführt wird, bringt die Steuereinheit ST den Umschalter UM in die gestrichelt dargestellte Stellung. Um dem Fernsprechnetz möglichst wenig Leistung zu entnehmen ist es günstig, wenn der Umschalter UM als bistabiles Relais ausgebildet ist und durch jeweils einen Impuls in die entsprechende Stellung gebracht wird. Nach dem Belegen der Fernsprechleitung FL gibt die Datenübertragungseinheit DU über die Leitung L2 als Signal S2 ein Quittungssignal Q an das Datenendgerät DE ab. Wenn das Quittungssignal Q nicht abgegeben wird, ist der Fernsprechapparat FA angeschaltet und die Fernsprechleitung FL kann nicht belegt werden. Zum Zeitpunkt t2 wird das Quittungssignal Q beendet und mit der Wahl des fernen Teilnehmers kann begonnen werden.

Falls die Rufnummer des fernen Teilnehmers in der Datenübertragungseinheit DU fest gespeichert ist, erzeugt die Steuereinheit ST Wählsignale, die beispielsweise als Wählimpulse ausgebildet sind.

Falls die Rufnummer des fernen Teilnehmers vom Datenendgerät DE festgelegt wird, gibt die Steuereinheit ST zum Zeitpunkt t3 als Signal S2 ein das Datenendgerät DE zur Abgabe einer Wählziffer aufforderndes Signal W1 ab. Im Anschluß daran überträgt das Datenendgerät DE die erste Wählziffer Z1 als Signal S3 über die Datenleitung L3 an die Datenübertragungseinheit DU. Die Wählziffer Z1 kann in Form von Wählimpulsen oder in Form von binär codierten Zeichen seriell über die Datenleitung L3 übertragen werden. Zum Zeitpunkt t4 und zu weiteren Zeitpunkten werden nach den Signalen W2 bis Wn die restlichen Wählziffern Z2 bis Zn übertragen. Es ist auch möglich, nach dem Signal W1 zeitlich nacheinander ohne Aufforderung durch weitere Signale, alle Wählziffern Z1 bis Zn zu übergeben.

Zum Zeitpunkt t5, nach dem Herstellen der Verbindung zum fernen Teilnehmer sendet dieser einen Antwortton mit einer Frequenz von beispielsweise 2100 Hz aus. Die Datenübertragungseinheit DU gibt das Antwortsignal A als Signal S2 über die Datenleitung L2 an das Datenendgerät DE ab. Nach dem Ende des Antwortsignals A wird zum Zeitpunkt t6 mit der Übertragung der Daten zwischen dem Datenendgerät DE und dem fernen Teilnehmer begonnen.

Über die Fernleitung FL empfangene Daten E werden als Signale S2 über die Datenleitung L2 zum Datenendgerät DE übertragen. In umgekehrter Richtung werden vom Datenendgerät DE abzugebende Daten S als Signale S3 über die Datenleitung L3 zur Datenübertragungseinheit DU abgegeben und über die Fernleitung FL zum fernen Teilnehmer übertragen.

Zum Zeitpunkt t7 werden die Übertragung der Daten und die Belegung der Fernsprechleitung FL beendet und der Umschalter UM nimmt wieder die durchgezogen dargestellte Stellung ein.

Bei der in Fig. 3 dargestellten Trennstufe TS sind zur Trennung des Bezugspotentials UB1 der Datenübertragungseinheit DU vom Bezugspotential UB2 des Datenendgerätes DE und zur leistungsarmen Übertragung der Signale S1 bis S3 Optokoppler K1 und K2 und ein Übertrager U vorgesehen. Anstelle des Übertragers U kann ebenfalls ein Optokoppler verwendet werden. Hierbei ist es günstig, einen Optokoppler mit hoher Stromübertragung zu verwenden, da dieser eine besonders geringe Leistung erfordert. Ebenso können anstelle der Optokoppler K1 und K2 ebenfalls Übertrager verwendet werden. Die Leitungen L1 und L3 sind mit Leuchtdioden in den Optokopplern K1 und K2 verbunden und der Treiberstrom wird dem Datenendgerät DE entnommen. Die an den Fototransistoren der Optokoppler K1 und K2 abgegebenen Signale werden in der Datenübertragungseinheit DU verarbeitet.

Die Primärseite des Übertragers U für die Signale S2 wird durch getastete Wechselspannungssignale angesteuert. Der Sekundärseite ist im Datenendgerät DE ein Komparator K nachgeschaltet, der immer dann ein Signal abgibt, solange das sekundärseitige Wechselspannungssignal einen vorgegebenen Schwellwert US überschreitet. Dem Komparator K ist eine wiedertriggerbare, monostabile Kippstufe MS nachgeschaltet, deren Verzögerungszeit größer ist als die Periodendauer der Wechselspannungssignale. Am Ausgang dieser monostabilen Kippstufe MS werden immer dann in die Signale S2 als Gleichspannungssignale abgegeben, wenn an der Primärseite des Übertragers U die entsprechenden Wechselspannungssignale anliegen.

**Patentansprüche**

1. Schaltungsanordnung zum Übertragen von Signalen zwischen einer Datenübertragungseinheit (DU) und einem Datenendgerät (DE) über eine Mehrzahl von Übertragungsleitungen (L1, L2, L3), zu denen eine Steuerleitung (L1) gehört, über die von dem Datengerät (DE) ein die Belegung einer mit der Datenübertragungseinheit (DU) verbundenen Fernleitung (FL) forderndes Belegungssignal (S1) an die Datenübertragungseinheit (DU) übertragen wird, wobei die Datenübertragungseinheit (DU) selbsttätig an die Fernleitung (FL) anschaltbar ist und wobei das Wählen einer fernen Teilnehmerstelle durch von der Datenübertragungseinheit (DU) abgegebene Wählsignale erfolgt, dadurch gekennzeichnet,

daß neben der genannten Steuerleitung (L1), die lediglich für die Übertragung des während der Dauer der Belegung der Datenübertragungseinheit (DU) durch das Datenendgerät (DE) als Dauersignal auftretenden Belegungssignals ausgenutzt ist, zwischen der Datenübertragungseinheit (DU) und dem Datenendgerät (DE) nur zwei gesonderte Datenleitungen (L2, L3) vorgesehen sind,

daß die eine Datenleitung (L2) zum Übertragen eines die Belegung der Fernleitung (FL) von der Datenübertragungseinheit (DU) her bestätigenden Quittungssignals (Q) zu dem Datenendgerät (DE), zum Übertragen mindestens eines das Datenendgerät (DE) zur Abgabe von Wählziffern (Z1 bis Zn) auffordernden Aufforderungssignals (W1 bis Wn) nach Übertragen des genannten Quittungssignals (Q), zum Übertragen eines die Verbindungsherstellung zu einer fernen Teilnehmerstelle quittierenden Antwortsignals (A) und zum Übertragen von Datensignalen (E) von dieser fernen Teilnehmerstelle her ausgenutzt ist und daß die andere Datenleitung (L3) zum Übertragen der für einen Verbindungsaufbau zu der gewünschten fernen Teilnehmerstelle hin erforderlichen Wählziffern (Z1 bis Zn) auf das Auftreten wenigstens eines Wahlaufforderungssignals (W1) und zum anschließenden Übertragen von Datensignalen von dem Datenendgerät (DE) zu der fernen Teilnehmerstelle hin ausgenutzt ist.

2. Schaltungsanordnung nach Anspruch 1, dadurch gekennzeichnet, daß die Wählziffern (Z1 bis Zn) über die zweite Datenleitung (L3) binär codiert übertragen werden.

3. Schaltungsanordnung nach Anspruch 1 oder 2, dadurch gekennzeichnet, daß die Datenübertragungseinheit (DU) eine das Bezugspotential (UB1) der Datenübertragungseinheit (DU) vom Bezugspotential (UB2) des Datenendgerätes (DE) trennende Trennstufe (TS) enthält.

4. Schaltungsanordnung nach Anspruch 3, dadurch gekennzeichnet, daß die Trennstufe (TS) Optokoppler (K1, K2) enthält.

5. Schaltungsanordnung nach Anspruch 3 oder Anspruch 4, dadurch gekennzeichnet, daß die Trennstufe (TS) Übertrager (U) enthält.

6. Schaltungsanordnung nach Anspruch 5, dadurch gekennzeichnet, daß der Übertrager (U) primärseitig durch getastete Wechselspannungssignale angesteuert wird und sekundärseitig mit einem Komparator (K) verbunden ist, dem eine monostabile Kippstufe (MS) mit einer Verzögerungszeit, die größer ist als die Folgefrequenz der Wechselspannungssignale, nachgeschaltet ist.

7. Schaltungsanordnung nach einem der Ansprüche 1 bis 6, bei der ein Umschalter vorgesehen ist, der eine Fernsprechleitung wahlweise mit der Datenübertragungseinheit oder mit einem Fernsprechapparat verbindet, dadurch gekennzeichnet, daß die Datenübertragungseinheit (DU) eine Schleifenstromüberwachung (SU) enthält, die die Belegung der Fernsprechleitung durch die Datenübertragungseinrichtung und eine Erzeugung des Quittungssignals (Q) verhindert, wenn der Fernsprechapparat (FA) angeschaltet ist.

8. Schaltungsanordnung nach Anspruch 7, dadurch gekennzeichnet, daß der Umschalter (UM) als bistabiles Relais ausgebildet ist.

## Claims

1. A circuit arrangement for the transmission of signals between a data transmission unit (DU) and a data terminal device (DE) via a plurality of transmission lines (L1, L2, L3) to which a control line (L1) is assigned for the transmission to the data transmission unit (DU) of a seizing signal (S1) which demands the seizure of a trunk line (FL) which is connected to the data transmission unit (DU), wherein the data transmission can be automatically connected to the trunk line (FL) and wherein the dialling of a remote subscriber station is effected by means of dialling signals which are emitted by the data transmission unit (DU), characterised in that in addition to said control line (L1), which is only utilised for the transmission of the seizing signal which occurs as a permanent signal during the duration of seizure of the data transmission unit (DU) by the data terminal device (DE), only two separate data lines (L2, L3) are arranged between the data transmission unit (DU) and the data terminal device (DE), one data line being utilised for the transmission form the data transmission unit (DU) to the data terminal device (DE) of acknowledgement signals (Q), which acknowledge seizure of the trunk line (FL), and being utilised for the transmission of at least one request signal which requests the data terminal device (DE) to emit dialling numbers (Z1 to Zn), after the transmission of said acknowledgement signal (Q), and also being utilised for the transmission of a reply signal (A) which acknowledges the establishment of a connection to a remote subscriber station, and further utilised for the transmission of data signals (E) from said remote subscriber station, and the other data line (L3) being utilised for the transmission of dialling numbers (Z1 to Zn) required for the establishment of a connection to the desired remote subscriber stations, following the occurrence of at least one dial request signal (W1), and for the transmission of data signals from the data terminal device (DE) to the remote subscriber station.

2. A circuit arrangement as claimed in claim 1, characterised in that the dialling numbers (Z1 to Zn) are transmitted via the second data line (L3) in a binary coded fashion.

3. A circuit arrangement as claimed in claim 1 or 2, characterised in that the data transmission unit (DU) comprises a separating stage (TS) which separates the reference potential (UB1) of the data transmission unit (DU) from the reference potential (UB2) of the data terminal device (DE).

4. A circuit arrangement as claimed in claim 3, characterised in that the separating stage (TS) contains optocouplers (K1, K2).

5. A circuit arrangement as claimed in claim 3 or claim 4, characterised in that the separating stage (TS) contains a transformer (U).

6. A circuit arrangement as claimed in claim 5, characterised in that the transformer (U) is controlled by keyed alternating voltage signals applied to the primary and has its secondary connected to a comparator (K) which is followed by a monostable flip-flop (MS) having a delay period longer than the repetition frequency of the alternating voltage signals.

7. A circuit arrangement as claimed in one of claims 1 to 6, wherein there is arranged a change-over switch which optionally connects a telephone line to the data transmission unit or to a telephone set, characterised in that the data transmission unit (DU) contains a loop current monitoring unit (SU) which prevents the telephone line form being seized by the data transmission device and acknowledgement signals (Q) from being produced when the telephone set (FA) is in circuit.

8. A circuit arrangement as claimed in claim 7, characterised in that the change-over switch (UM) is a bistable relay.

## Revendications

1. Montage pour transmettre des signaux entre une unité de transmission de données (DU) et un équipement terminal de données ou terminal (DE) par l'intermédiaire de plusieurs lignes de transmission (L1, L2, L3) auxquelles appartient une ligne de commande (L1) par l'intermédiaire de laquelle on transmet à partir du terminal à l'unité de transmission de données (DU) un signal d'occupation (S1) sollicitant l'occupation d'une ligne interurbaine (FL) reliée à l'unité de transmission de données (DU), cette dernière étant susceptible de se brancher automatiquement sur la ligne interurbaine et la sélection d'un abonné d'interurbain étant opérée par des signaux de sélection émis par l'unité de transmission de données (DU), caractérisé par le fait qu'en plus de ladite ligne de commande (L1) qui n'est utilisée que pour la transmission du signal d'occupation apparaissant comme signal permanent pendant la durée de l'occupation de l'unité de transmission de données (DU) par le terminal (DE), il est prévu entre l'unité de transmission de données (DU) et le terminal (DE) uniquement deux lignes de transmission de données particulières (L2, L3), que l'une des lignes de transmission de données (L2) est utilisée pour la transmission au terminal (DE) d'un signal d'accusé de réception (Q) confirmant l'occupation de la ligne interurbaine par l'unité de transmission de données (DU), pour la transmission d'au moins un signal de cadran (W1 à Wn) sollicitant le terminal (DE) pour l'émission de chiffres de numérotation (Z1 à Zn) après la transmission dudit signal d'accusé de réception (Q), pour la transmission d'un signal de réponse (A) confirmant l'établissement de la liaison avec un poste d'abonné d'interurbain, et pour la transmission de signaux de données (E) de ce poste d'abonné, et que l'autre ligne de transmission de données (L3) est utilisée pour la transmission des chiffres de sélection (Z1 à Zn) nécessaires pour l'établissement de la liaison avec le poste d'abonné d'interurbain, à l'apparition d'au moins un signal de demande de sélection (W1) et pour la transmission qui s'ensuit de signaux de données du terminal (DE) au poste d'abonné interurbain.

2. Montage selon la revendication 1, caractérisé par le fait que les chiffres de numérotation (Z1 à Zn) sont transmis en codage binaire par l'intermédiaire de la seconde ligne de transmission de données (L3).

3. Montage selon la revendication 1 ou 2, caractérisé par le fait que l'unité de transmission de données (DU) comporte un étage de séparation (TS) isolant le potentiel de référence (UB1) de l'unité de transmission de données (DU) du potentiel de référence (UB2) du terminal (DE).

4. Montage selon la revendication 3, caractérisé par le fait que l'étage de séparation (TS) comporte des opto-coupleurs (K1, K2).

5. Montage selon la revendication 3 ou la revendication 4, caractérisé par le fait que l'étage de séparation (TS) comporte un translateur (U).

6. Montage selon la revendication 5, caractérisé par le fait que le translateur (U) est attaqué du côté primaire par des signaux de tensions alternatives impulsionnels et, du côté secondaire, il est relié à un comparateur (K) en aval duquel est monté un étage à bascule monostable (MS) à durée de retard qui est supérieure à la fréquence de répétition des signaux de tensions alternatives.

7. Montage selon l'une des revendications 1 à 6, dans lequel il est prévu un commutateur reliant une ligne téléphonique au choix avec unité de traitement de données ou avec un appareil téléphonique, caractérisé par le fait que l'unité de transmission de données (DU) comporte une boucle de contrôle du courant (SU) qui empêche l'occupation de la ligne téléphonique par le dispositif de transmission de données et la génération d'un signal d'accusé de réception (Q) lorsque l'appareil téléphonique (FA) est branché.

8. Montage selon la revendication 7, caractérisé par le fait que le commutateur (UM) est réalisé sous la forme d'un relais bistable.

## FIG 1

## FIG 2

## FIG 3